# EUROPEAN PATENT APPLICATION

(11) **EP 2 172 872 A2**
(43) Date of publication of application: **07.04.2010**
(21) Application number: 09172142.3
(22) Date of filing: 02.10.2009
(51) Int. Cl.: G06K 9/20, G06K 9/00

(54) **Extended image height camera**

(30) Priority: 03.10.2008 GB 0818115
(71) Applicant: Hyde, John, Doncaster DN5 7UP (GB)
(72) Inventor: Hyde, John, Doncaster DN5 7UP (GB)
(74) Representative: Harrison Goddard Foote

(57) **Abstract**

An imaging system (1) comprising at least first and second imaging devices, each imaging device comprising an imaging chip (2, 4) and a lens (3, 5), the imaging devices being configured to image first and second overlapping or abutting but not identical image areas, and control logic circuitry (6, 7) configurable to process and transmit image data from the imaging devices according to a control protocol. The imaging system (1) is especially suited for capturing face recognition data while allowing for possible different locations of user's faces in an imaging area.

## Description

### BACKGROUND

Embodiments of the present invention relate to cameras or imaging devices useful in facial recognition systems and adapted to cater for subjects of different heights.

Many applications involving image capture of people now exist. These applications range from general security video surveillance systems to highly advance facial recognition systems. A common problem with these systems is achieving the ability to capture images of people with a wide range of height and more specifically clear images of the facial region. Methods commonly used to help capture the correct image area include the use of wide angle lenses and mechanical pan, tilt and zoom. Wide angle lenses produce significant optical distortion and significantly reduce the available resolution within the image. The optical distortion on such systems requires complex vision processing algorithms to correct and may render the image unsuitable for automatic processing. Pan, tilt and zoom provides a high quality image but has mechanical moving parts that may be slow and unreliable. The image also only contains a sub region of the overall region, once the camera has zoomed in the peripheral, vision is essentially lost. It is also possible to employ multiple cameras viewing different regions but this is a more expensive option.

### BRIEF SUMMARY OF THE DISCLOSURE

According to the present invention, there is provided an imaging system comprising at least first and second imaging devices, each imaging device comprising an imaging chip and a lens, the imaging devices being configured to image first and second overlapping or abutting but not identical image areas, and control logic circuitry configurable to process and transmit image data from the imaging devices according to a control protocol.

The expression "overlapping or abutting but not identical image areas" is intended to include, say, a pair of images of the same area but taken from different positions or angles, but not a pair of identical views of the same area from the same position.

The system advantageously comprises means to determine which of the imaging devices images at least a partial image of a predetermined object to be imaged, and means to select only those imaging devices for acquiring the image data.

The predetermined object may, for example, be a human face, and the system may be operable to determine which of the imaging devices actually images at least part of a user's face when the user is in front of the camera, and then to select only those imaging devices for acquiring the image data to be processed and transmitted. In this way, it is possible to guarantee that a complete facial recognition dataset can be acquired automatically and without a significant increase in data processing time even for users of very different heights whose faces may be located at different positions in front of the camera. Known facial recognition algorithms may be used to determine which parts of an overall dataset correspond to face recognition data. These algorithms may operate by identifying spectrographic and reflectance characteristic of human skin, and/or by identifying boundaries between object and background. The precise nature of the image processing and facial recognition algorithms that can be used with embodiments of the invention is beyond the scope of the present application, and will be known to those of skill in the art. What is important is that embodiments of the present invention actively select imaging devices that are imaging only predetermined object data so as to provide an extended viewing area when needed but without unnecessarily increasing data processing load.

The control protocol may be as follows:
- Mode 1:: First imaging device only
- Mode 2:: Second imaging device only
- Mode 3:: Full image from first imaging device followed by full image from second imaging device
- Mode 4:: Full image from first imaging device followed by partial image from second imaging device where the start of the partial image is coincident with the end of the full image.

Additional or alternative modes may be employed as required.

The imaging devices may be arranged in an array, for example an array having dimensions n x m, where n and m are positive integers and n > m.

In preferred embodiments configured for use in face recognition applications, m = 1 or 2 and n < 5, alternatively m = 1 and n < 4.

Embodiments of the invention use multiple imaging chips to form a single camera with an extended viewing region. For clarity the description is based on extending the viewable region in a single axis and with two imaging devices. However the technique can be applied to multiple imaging elements extending the viewing range in multiple axes.

The invention extends the viewing region significantly while not introducing the distortions of the wide angle lenses. The viewing region extension is also achieved without the loss of resolution allowing direct image processing of the image.

A further advantage of embodiments of the invention is that the viewing region is extended in the direction required only. The result of this is particularly relevant to facial recognition where the human face has a height to width ratio of approximately 1.6:1. When this is coupled to the height range of individuals the ratio of required image height to width increases to around 7:1 this range being based on the height range of individuals of 4.5 to 6.5 feet. This range covers young teenage children to the majority of the adult population. In practice some horizontal allowance must be made for the positioning of the face, this reduces the demand on the large aspect ratio such that a practical system may require aspect ratios of 3:1.

The net result of only transmitting the extended portrait is that a significant reduction in the amount of data being transmitted is achieved. This reduced dataset also reduces the demand on the data processing required during the image analysis.

A further advantage of the invention relates to the distance from the camera system in applications where operator input is required. Assuming the camera is mounted within the user interface of an imaging acquisition system such as a facial recognition system, the distance of the operator from the camera is likely to be at approximately arms length which is around 0.5m. The height range of the operator means that the required viewing angle of the system is very wide. To capture this wide viewing angle irrespective of the final image resolution a wide angle lens must be employed if a single imaging device is to be employed. This results in the previously stated distortion from the use of wide angle lenses. This invention extends the viewing angle such that close range operation can be achieved by a wide height range of people without the use of wide angle lenses.

Accordingly, in preferred embodiments of the present invention, each lens is configured to image objects located not more than 1m from the lens, advantageously not more than 0.75m, preferably not more than 0.5m from the lens.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### DETAILED DESCRIPTION

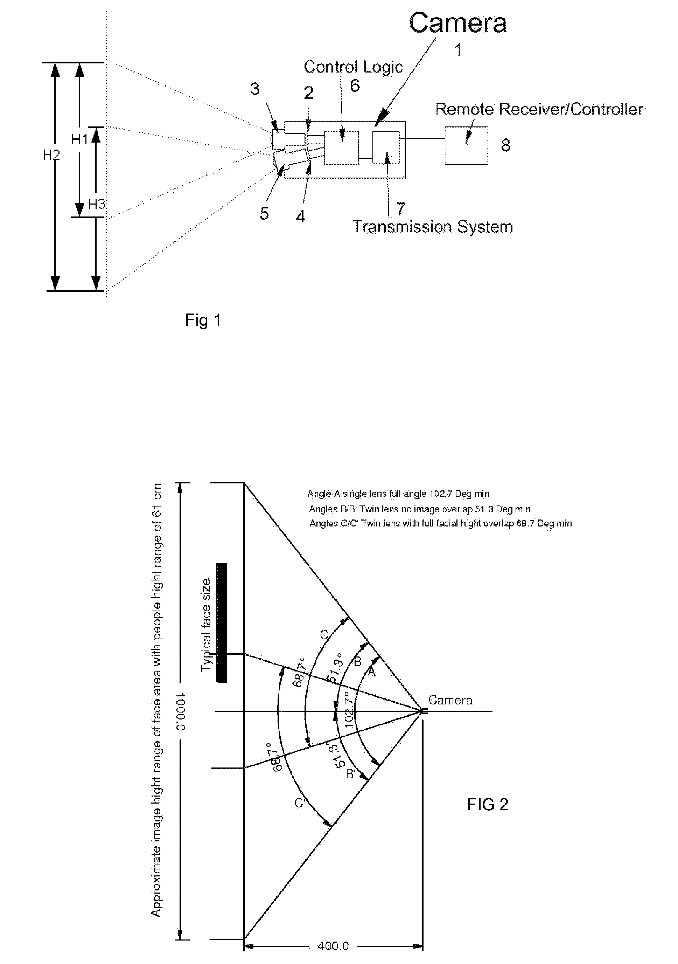

Figure 1 shows an embodiment of the invention comprising a camera 1 in which an image segment of height (H1) of an object of height (H2) is focussed onto a CMOS or CCD imaging chip 2 via lens 3. A second segment of the image of height (H3) is focussed onto a second CMOS or CCD imaging chip 4 via lens 5. The two imaging chips 2, 4 are mounted in close proximity to each other so as to approximate to a single imaging device. Lens 5 is mounted at an angle to lens 3 so that its viewing region either starts at the edge of the viewing region of lens 3 or overlaps the image seen by lens 3 to some extent. Imaging chip 4 is mounted at the same angle with respect to chip 2 as lens 5 is mounted to lens 3 such that the imaging chips 2, 4 are normal to their associated lenses 3, 5.

Figure 2 shows the relationship between the imaging chips 2 and 4, lenses 3 and 5 and the viewing regions seen by the two imaging systems. The overlap region is determined by the viewing angle of the two imaging paths and the angle set between them. The diagram shows a typical short range application based on a user interface at arms length containing the imaging device. Three configurations are shown, single lens, two non overlapping imaging devices and two overlapping devices. The example is based on an interface operator distance of 0.4m and an image height range of 1 m.

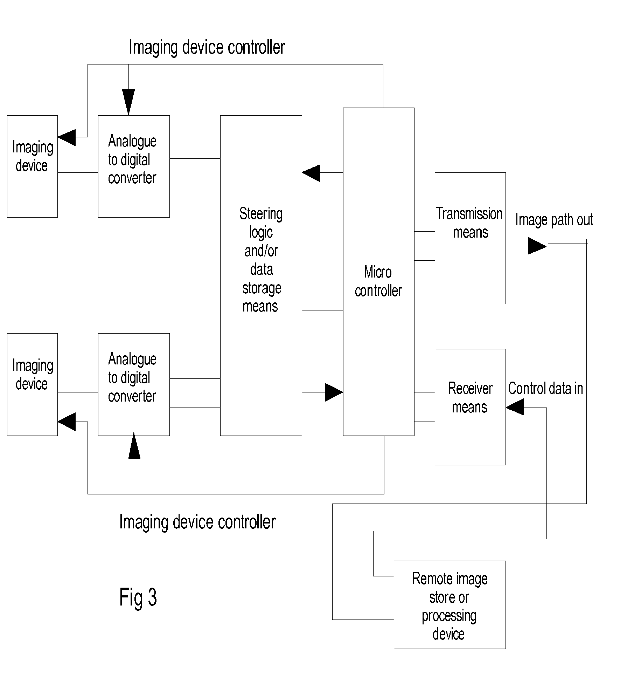

Figure 3 shows a controlling method. The control logic operates in one of several modes and can be switched between modes by commands over the communication link.
Mode 1 image from imaging channel 1 only
Mode 2 image from imaging channel 2 only
Mode 3 full image from imaging channel 1 followed by full image from 2
Mode 4 full image from imaging channel 1 followed by partial image from channel 2 where the start of the partial image from channel 2 is coincident with the end of channel 1

Other modes may be employed as appropriate for the imaging task.

The camera comprises two imaging devices such as CMOS or CCD devices 2, 4. The operation of these devices is controlled by a local micro controller or other control logic 6. The local micro controller 6 sets the operating conditions of the imaging devices such as exposure length, gain and also triggers the acquisition of the image according to the required mode. In sequential mode one of the imaging devices is triggered and the resulting data steered to a data transmission system 7. On completion the second imaging device is triggered and steered to the transmission means 7. Where flash photography is used, both imaging devices are triggered simultaneously and one or both of the resulting images are placed in temporary store. Each image is then transmitted in turn. Either two full images (one for each imaging device) are transmitted or a truncated image is transmitted from one or both of the imaging devices such that overlapping image data is removed prior to transmission. Alternatively overlapping image data may be removed by the receiving image processing device after transmission of two full images.

The transmitter 7 is arranged to transmit, preferably wirelessly according to known protocols, image data to a remote receiver or controller 8, which may be linked to a central computer or host by networking means.

In the particular application of facial recognition two full images may be transmitted where the overlap of the two images is such that the overlapping region is slightly larger than the typical face. A full facial image is therefore guaranteed to be acquired by one of the imaging devices removing the need to splice the data from the two devices.

Transmission of the images may be from both imaging chips or from a single chip once the head location has been identified.

Where flash photography is used the imaging devices are triggered simultaneously. This ensures that the two imaging devices capture images at the same instant in time thus avoiding data skew due to time delays between the acquisition of the two images. This method is particularly suited to global shutter imaging devices. Where ambient or steady state lighting is employed exposure can be taken sequentially such that the image from one imaging device is captured and transmitted followed by the second or subsequent imaging devices. This may result in significant data skew but removes the necessity of transmitting or the storing of multiple images simultaneously and is particularly suitable for rolling shutter type imaging devices.

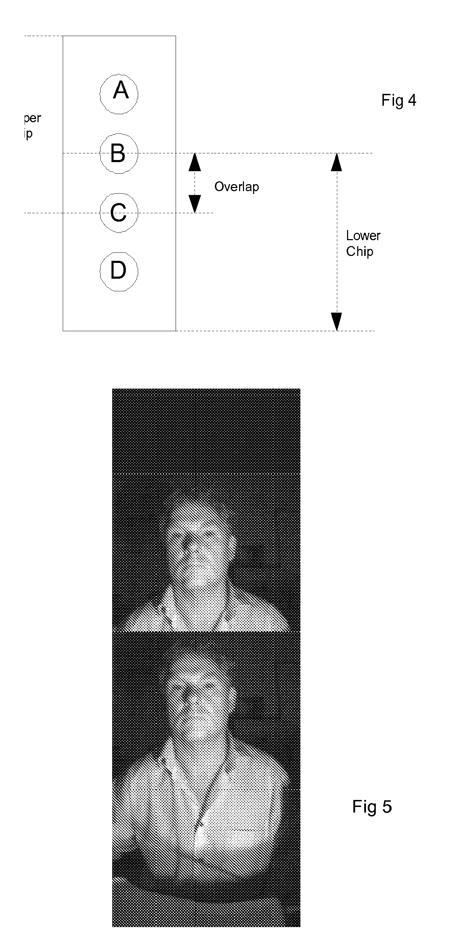

In Figure 4 the facial area is represented by circles A B C and D. Each circle is smaller than the overlap region. A is in the upper device only. While B is partially seen by the lower device, it is wholly seen by the upper. C is partially seen by the upper but wholly seen by the lower. D is wholly seen by the lower only.

Figure 5 shows the resulting image of a two imaging chip implementation of the invention. The facial region on the lower image segment is close to the upper limit of the lower imaging chip. However the facial region is well within the limits of the upper imaging chip thus allowing a taller person to be processed without any change to the camera positioning. The image was acquired with global shutters and near infra-red flash illumination.

## Claims

1. An imaging system (1) comprising at least first and second imaging devices, each imaging device comprising an imaging chip (2, 4) and a lens (3, 5), the imaging devices being configured to image first and second overlapping or abutting but not identical image areas, and control logic circuitry (6, 7) configurable to process and transmit image data from the imaging devices according to a control protocol.

2. A system (1) as claimed in claim 1, further comprising means (6) to determine which of the imaging devices images at least a partial image of a predetermined object to be imaged, and means to select only those imaging devices for acquiring the image data.

3. A system (1) as claimed in claim 1, wherein the control protocol is configured to provide at least the following modes of operation:
Mode 1: first imaging device only
Mode 2: second imaging device only
Mode 3: full image from first imaging device followed by full image from second imaging device
Mode 4: full image from first imaging device followed by partial image from second imaging device where the start of the partial image is coincident with the end of the full image.

4. A system (1) as claimed in any preceding claim, wherein the imaging devices are arranged in an array.

5. A system (1) as claimed in claim 4, wherein the array has dimensions n x m, where n and m are positive integers and n > m.

6. A system (1) as claimed in claim 5, wherein m = 1 or 2 and n < 5.

7. A system (1) as claimed in claim 5, wherein m = 1 and n < 4.

8. A system (1) as claimed in any preceding claim, wherein the lens (3) and chip (2) of the first imaging device are angled to the lens (5) and chip (4) of the second imaging device such that the first imaging device images an image area overlapping with an image area imaged by the second imaging device.

9. A system (1) as claimed in any preceding claim, wherein each lens (3, 5) is configured to image objects located not more than 1 m from the lens.

10. A system (2) as claimed in any preceding claim, wherein each lens (3, 5) is configured to image objects located not more than 0.75m, preferably not more than 0.5m from the lens.

11. A system (1) as claimed in any preceding claim, configured as a camera (1) in a face recognition system.

12. A face recognition system including an imaging system (1) as claimed in any one of claims 1 to 10.
